# EUROPEAN PATENT SPECIFICATION

(11) **EP 3 115 237 B1**
(45) Date of publication and mention of the grant of the patent: **04.03.2020**
(21) Application number: 15175892.7
(22) Date of filing: 08.07.2015
(51) Int. Cl.: B60J 7/00

(54) **OPEN ROOF CONSTRUCTION FOR A VEHICLE AND ROLLO ASSEMBLY FOR USE THEREIN**
OFFENE DACHKONSTRUKTION FÜR EIN FAHRZEUG UND ROLLOANORDNUNG ZUR VERWENDUNG DARIN
STRUCTURE DE TOIT OUVRANT POUR VÉHICULE ET SON ENSEMBLE ROULANT ASSOCIÉ

(43) Date of publication of application: 11.01.2017
(73) Proprietor: Inalfa Roof Systems Group B.V., 5804 AB Venray (NL)
(72) Inventor: Ten-Jet-Foei, Suyanto Teri Wahiyu, 6538 HR Nijmegen (NL)
(74) Representative: De Vries & Metman

(56) References cited:
- EP-A1- 1 553 259
- EP-A1- 1 712 389
- WO-A1-2010/022768
- DE-A1-102009 033 885

## Description

The invention firstly relates to an open roof construction for a vehicle according to the preamble of claim 1.

Such an open roof construction is described in EP 2 902 260 A1. It describes an open roof construction having a sunscreen comprising a visible portion and a non-visible portion above it. The visible portion is stationary with respect to the sides of the roof opening and the non-visible portion can be unwound at one end and reversed into the visible portion on the opposite end. Thus, the visible portion is stationary, but the length of it varies to open and close the rollo screen. Because of such a stationary position of the rollo screen edge of the visible portion, any connections there also have a stationary position to the stationary part of the open roof construction. This has a positive effect on the life span and reliability of these connections, while allowing to simplify the design of these connections.

EP 1 712 389 A1 also describes a construction with a sunscreen that has a non-visible portion above a visible portion and where the non-visible portion can be reversed in a visible portion. The visible portion is not stationary in this construction.

It is one of the objects of the present invention to provide an improved open roof construction of the present type, in particular in relation to the holding members.

To obtain this object, the open roof construction comprises the features of the characterizing portion of claim 1.

In this manner, the edges of the sunscreen are reliably held on the one hand and are easily inserted into and removed from the holding groove on the other hand.

In one embodiment, the winding shaft for the rollo screen is rotatable around a stationary axis of rotation, and wherein the rollo screen, starting from the winding shaft, firstly extends in a first direction D1, next around a reversal member at the position of the operating beam and finally back in an opposite second direction D2 and ends at the rollo screen edge which is attached to a stationary member of the open roof construction.

This embodiment has the advantage that the winding shaft, which is relatively bulky, is stationary, so it is not necessary to reserve room for it along the whole length of the sunscreen.

Each hooking member may be resiliently compressible so as to be insertable into the holding groove through the narrow entrance and expandable once within the holding groove, the operating beam being provided with a compression element compressing the hooking member when the rollo screen is wound on to enable the hooking member to leave the holding groove.

In this way, the hooking member can change its shape with the assistance of the displacing element to enable entering and exiting the holding groove.

To facilitate the entrance of the hooking member into the holding groove, the operating beam is provided with a pushing member to push the hooking member into the holding groove when the operating beam is moved to unwind the rollo screen. The hooking member will change its shape as a result of the pushing member pushing the compressible and expandable hooking member through the narrow entrance of the holding groove.

The pushing member may comprise a knife-shaped element which extends into the holding groove. Due to the knife shape, it will fit through the narrow entrance of the holding groove and thus the pushing action can be continued into the holding groove to further improve the reliability of the pushing-in action.

If the knife-shaped element is circular and rotatable, the sliding movements between the knife-shaped element and the hooking member will be minimized to minimize the wear of the hooking member.

The hooking member includes a sharp inward corner facing the narrow entrance opening, the knife-shaped element engaging the corner when it pushes the hooking member into the holding groove.

The sharp inward corner provides a reliable position for the pushing member to exert pushing forces.

In another embodiment, the pushing member remains outside the holding groove and the hooking member will then be made rigidly enough to be pushed from outside the holding groove.

In one embodiment, the narrow opening of the holding groove is on the upper side thereof.

The advantage of this position of the holding groove is that the tension forces from the rollo screen on the hooking member is at an angle to the outward movement of the hooking member, so that it is almost impossible for the rollo screen to pull the hooking member from the holding groove.

In another embodiment, the narrow opening of the holding groove is on the lateral side thereof facing the opposite holding groove.

Such position of the holding groove results in a minimal building height.

To improve the holding action of the hooking member, for both embodiments of the holding groove, the hooking member is arrow shaped.

The arrow shaped member may then hook on both sides of the holding groove (with a fitting arrangement of the holding groove).

In another embodiment, to minimize the winding thickness of the sunscreen edges on the winding shaft, the hooking member is formed of a rigid strip folded away from the edge of the rollo screen.

In that case, the operating beam may be provided with a locking member arranged within the holding groove on the side of the rollo screen facing away from the rigid strip in order to push the rollo screen and the rigid strip toward a side of the holding groove such that the rigid strip is hooking behind a rib defining one side of the narrow entrance.

The locking member keeps the rigid strip of the hooking member in engagement with the rib, thus improving the reliability of the hooking action.

The locking member may be a translucent rod-shaped member which is visible through the narrow entrance of the holding groove and which is lighted by a light source, which is either stationary lighting the rod-shaped member from the side, or is movable with the rod-shaped member and lighting it from the end.

The locking member may thus have more than one function. It can even have a further function if it replaces a drive cable for the sunscreen engaging the operating beam. The rod-shaped member forming the locking member will generally have to be bendable if space requires so and in case it moves with the operating beam and should extend along the whole (visible portion of the) sunscreen when it is unwound. Alternatively, the rod-shaped member may be stationary and compressible or movable in a direction perpendicular to length of the rod-shaped member to allow the displacing element to pass.

The invention further relates to a rollo assembly intended for use in an open roof construction according to the present invention.

Hereinafter the invention will be elucidated while referring to the drawings, in which:
Fig. 1 is a longitudinal sectional view of an open roof construction according to the present invention;
Fig. 2a and 2b are perspective views of the rollo assembly of the open roof construction of Fig. 1 in a closed and open position, respectively.
Fig. 3 is a perspective view from the rear, showing a part of the rollo screen near an end of the operating beam and an end of the stationary guide.
Fig. 4 is an enlarged view of Fig. 3, but without the rollo screen and guide.
Fig. 5 is a cross-sectional view along the line V-V in Fig. 3.
Fig. 6a is an exploded version of the view of Fig. 3.
Fig. 6b is an exploded view of the parts of Fig. 6a, but as seen from outside the guide.
Figs. 7a, 7b, 7c are cross-sectional views along the lines VIIa, VIIb, VIIc in Fig. 5.
Figs. 8a, 8b are views similar to that of Fig. 4, but showing alternative arrangements with a light source.
Figs. 9a, 9b and 10a, 10b are cross-sectional views corresponding to that of Fig. 7c, and 7b, respectively, but showing alternative embodiments.
Figs. 11a-11d are views similar to that of Fig. 7c, but showing four other arrangements of the hooking member and holding groove combination.
Figs. 12-16c are views similar to those of Figs. 3-7c, but showing an alternative embodiment.
Fig. 17 is an exploded view similar to that of Fig. 15a, but showing another embodiment.
Fig. 18 is a cross sectional view along the line XVIII-XVIII in Fig. 17.
Fig. 19 is a cross-sectional view along the line XIX-XIX in Fig. 18.
Fig. 20 is a view similar to that of Fig. 14, but showing a further embodiment.
Figs. 21a-21c are cross-sectional views along the lines XXIa-XXIa, XXIb-XXIb and XXIc-XXIc, respectively in Fig. 20.
Figs. 22a, 22b - 24a, 24b are cross-sectional views of the guide illustrating how different embodiments of the hooking member are introduced into the holding groove by the knife-shaped element.
Figs. 25a, 25b - 28a, 28b illustrate two positions of different embodiments of the hooking member before and after introduction into the holding groove.

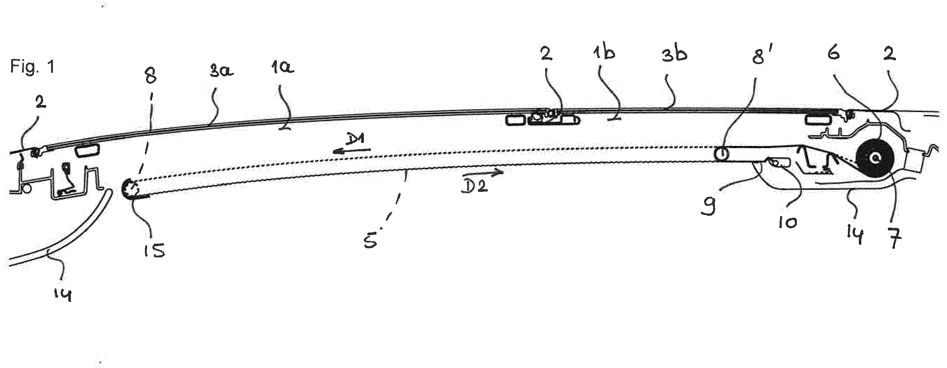

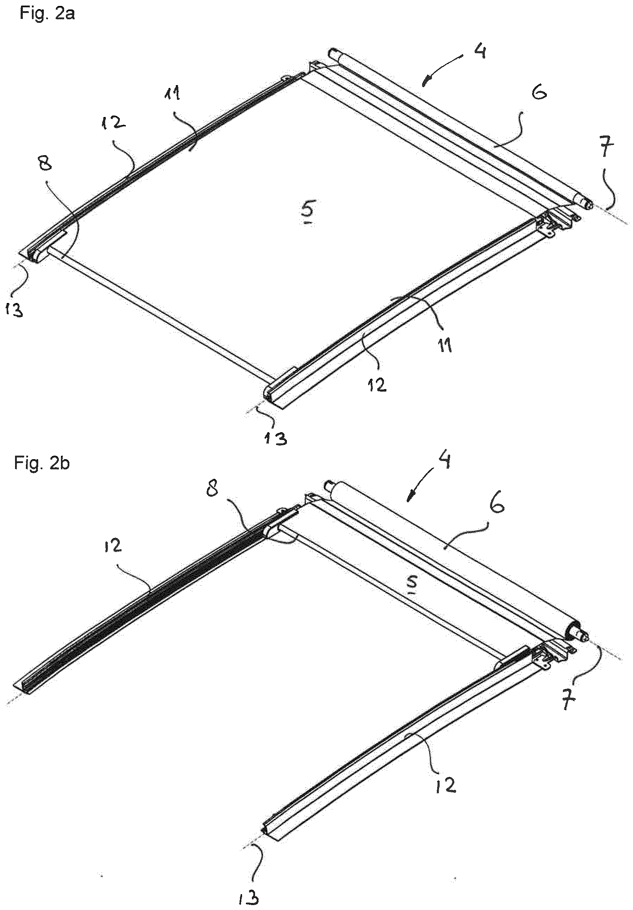

Referring firstly to Figs. 1 and 2, an open roof construction for a vehicle is illustrated. It comprises a roof opening 1 in a stationary roof part 2 which can be closed by a movable roof closure. Here, there is in fact a front roof opening 1a and a rear roof opening 1b, closable by a rigid transparent front panel 3a and a rigid transparent rear panel 3b. As is known in the respective field, such roof panel or panels 3 may be operated (by means not illustrated but generally known) for opening and closing the roof opening 1. One of the panels 3, normally the rear panel 3b, may also be fixed.

A rollo assembly 4, here acting as a sunscreen assembly, is positioned below said roof opening 1 (although it is noted that parts of such a rollo assembly 4 also may be located below the stationary roof part 2). The rollo assembly 4 comprises a rollo screen 5 and a winding shaft 6 for the rollo screen 5 which is rotatable around a stationary axis of rotation 7. The rollo screen 5, starting from the winding shaft 6, firstly extends substantially in a first direction D1, next around a reversal member 8 and finally back in an opposite second direction D2 and ends at a rollo screen edge 9 which is attached to a stationary member 10 of the open roof construction.

The reversal member 8 is movable in parallel to said first and second directions D1, D2 in correspondence with the amount of rollo screen 5 being wound on or off said winding shaft 6. For achieving the required translational movement of the reversal member 8 it has two opposite longitudinal edges 11 (Fig. 2) guided in two opposite guides 12 extending in parallel to said first and second directions D1,D2 (generally the lengthwise direction of the vehicle) at opposite side edges of the roof opening 1. Two drive cables 13 (which are part of a drive mechanism) are provided engaging said opposite ends 11 of the reversal member 8. The drive cables 13 may run in cable channels (not illustrated here) provided in the guides 12. The position of the reversal member 8 and thus of the rollo screen 5 is controlled by the drive cables 13. In Fig. 1 the reversal member 8 (and thus the rollo screen 5) has been illustrated in two different positions: in solid lines a position 8' in which the rollo screen 5 is in a position substantially fully opening the roof opening 1 (see also Fig. 2a) and at least partially hidden by a headlining 14 and with dashed lines a fully closed position 8 (see also Fig. 2b). Thus, the lower, visible portion of the rollo screen 5 is stationary, only the length thereof varies due to the movement of the reversal member.

It is possible that the winding shaft 6 is provided with a spring member (such as an internal coiled spring) biasing the winding shaft 6 in a direction for winding the rollo screen 5. As a result the rollo screen is always kept taut, irrespective the position of the reversal member 8.

In the illustrated embodiment the reversal member 8 comprises a rotatable cylindrical member which will rotate in accordance with the rollo screen 5 moving around it when the reversal member 8 is displaced. As an alternative (not illustrated) the reversal member may comprise a non-rotating member providing or defining a low friction surface intended for engaging the rollo screen 5.

The reversal member 8 further may be provided with a cover member 15 which hides the part of the rollo screen 5 extending around the reversal member 8 from view.

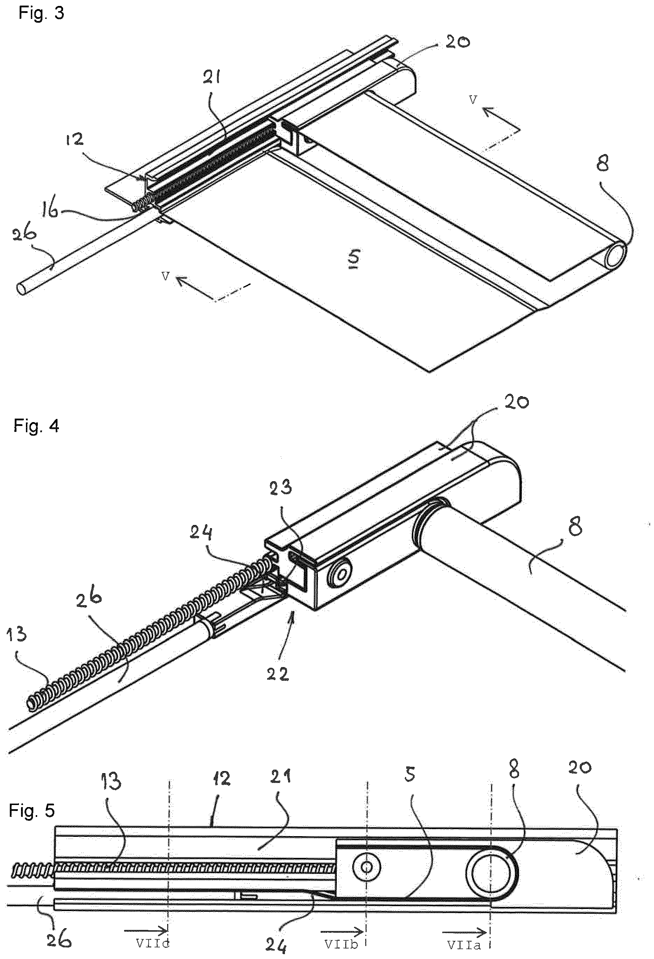

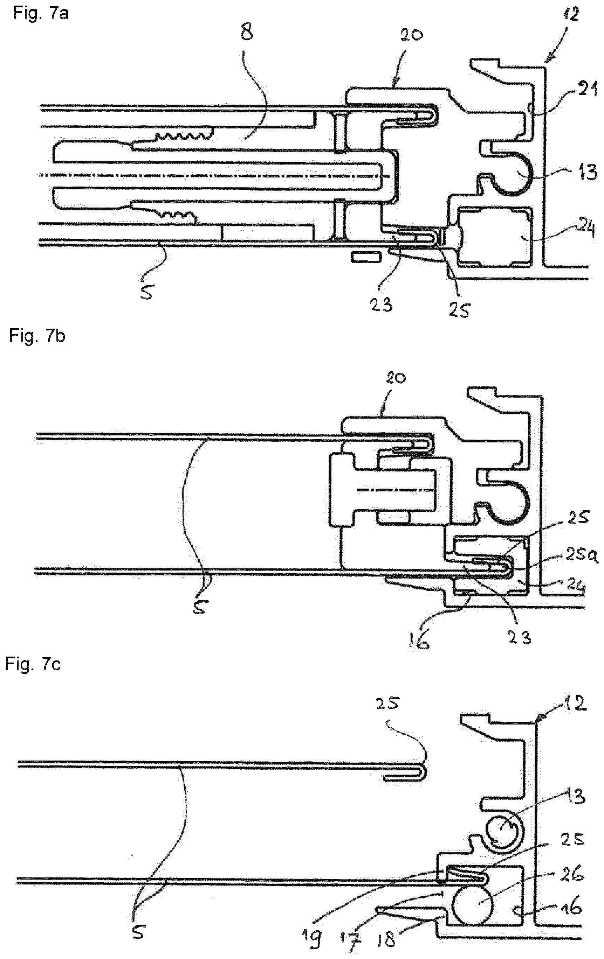

The guides 12 are used for supporting the rollo screen 5 and keeping it in a desired position. Figs. 3 - 7 show the cooperation between one of the guides 12 and the sunscreen 5 in one embodiment. The guide 12 comprises a holding groove 16 having a narrow entrance opening 17 formed by a lower and upper rib 18, 19 (see in particular Fig. 7). The entrance opening 17 is directed horizontally towards the opposed holding groove 16 of the other guide 12. The reversal member 8 and the cover member 15 (not shown here) form the operating beam for the sunscreen 5. At each end of the operating beam, there is provided a slider 20 to which the drive cable is attached. The slider 20 is guided by one or more guide grooves 21 in the guide 12. Rollo screen displacing means 22 are attached to the slider 20. They comprise a knife-shaped element 23 and a compressing element 24. These elements 23, 24 are used to insert and remove a hooking member 25 at each the longitudinal edge 11 of the rollo screen 5 into and out of the holding groove 16. In this embodiment, the hooking member 25 is formed by a rigid strip folded away from the edge of the rollo screen 5. Such strip is known per se. In the embodiment shown, the strip of the hooking member 25 is folded in upward direction. The adjacent edge 11 of the rollo screen 5 may also be formed from more rigid, for example plastic, material, so that the hooking member 25 includes a sharp inward corner 25a in which the knife-shaped element 23 may engage. The hooking member 25 is resiliently compressible so as to enter the holding groove 16 through the narrow opening 17 and expandable once in the holding groove 16.

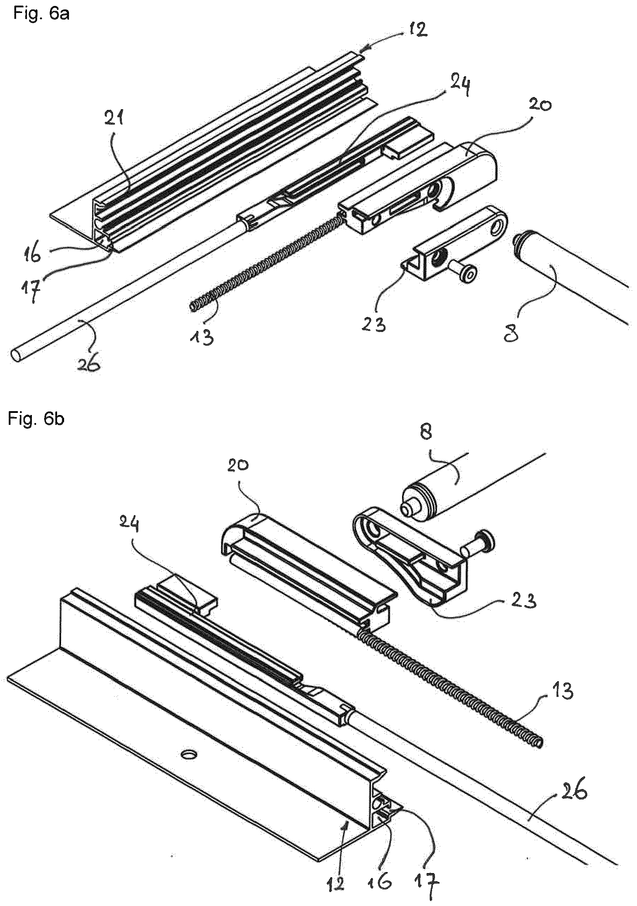

Fig. 6b and the cross-sections of Figs. 7a - 7c show that the knife-shaped element 23 has a varying extent in lateral direction when seen in longitudinally different cross-sections. In the cross section of Fig. 7a close to the reversal member 8 the lateral extent is such that it remains outside the holding groove 16. In a direction away from the reversal member 8, the knife-shaped element 23 gradually extends into the holding groove 16, such that when the knife-shaped element moves along the edge 11 of the rollo screen 5, the strip 25 and the adjacent edge 11 of the rollo screen 5 are stretched outwardly into the holding groove 16. In Fig. 7b it has completely entered the holding groove 16, but it is inside the compressing element 24, so that it cannot expand. At the third cross section according to Fig. 7c the strip 25 has moved out of the compressing element 24 (which has first moved the hooking element 25 in upward direction) and has hooked behind the upper rib 19 bordering the narrow entrance opening 17 of the holding groove 16. The rollo screen 5 now remains stretched between the guides 12.

To assist in maintaining the engagement of the hooking member 25 and the rib 19 a locking rod 26, here attached to the compressing element 24 of the slider 20 and positioned below the hooking member 25, engages the hooking member 25 from below and keeps it at a height that the hooking member 25 cannot escape from the holding groove 16 through the narrow entrance opening 17.

When the winding shaft 6 of the rollo screen 5 rotates to wind it, the reversal member 8 moves in opposite direction and the compressing element 24 moves with it. The hooking member 25 arrives from the position of Fig. 7c in the position of Fig. 7b where it is compressed and moved vertically by the compressing element 24 to a position aligned with the narrow entrance opening 17. Thus, when the knife-shaped element 23 moves back along the rollo screen 5, the stretching force of the rollo screen 5 urges the hooking member 25 to follow the knife-shaped element 23 inwardly and out of the holding groove 16 as is shown in Fig. 7b.

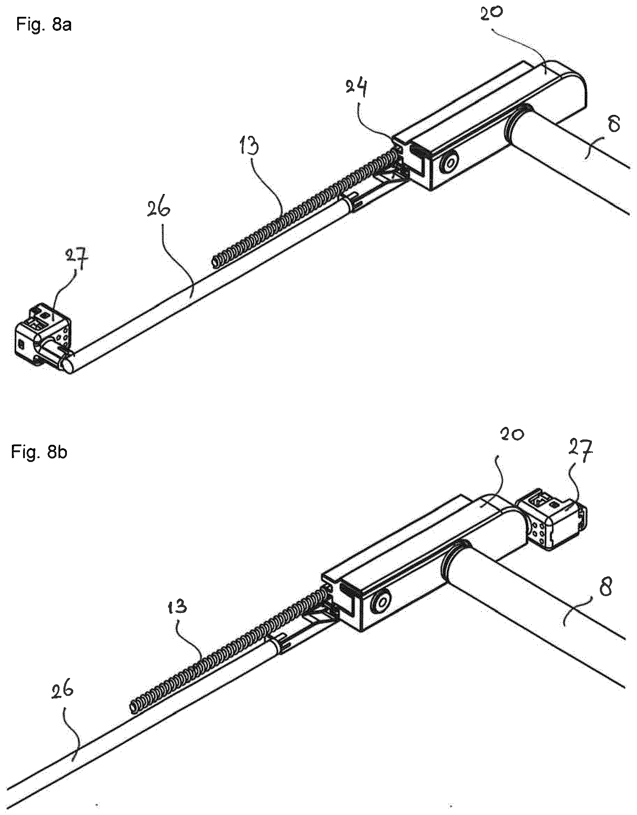

In the embodiment of Figs. 4 - 7, the locking rod 26 moves with the reversal member 8. If it is at least partly transparent, this locking rod 26 may also function as light emitting rod, emitting light through the narrow entrance opening 17 of the holding groove 16 to the interior of the vehicle. A light source 27 (e.g. a LED) may be stationary in a position where the locking rod 26 moves in front of the light source (Fig. 8a) or be movable as well. Fig. 8b shows that the light source 27 is attached to the slider 20 or displacing means 22. The light is then transmitted through the slider 20 and/or displacing means 22 to the light emitting locking rod 26. The light source may also be arranged on the other end of the locking rod 26. The light source 27 may be switched on and off, for example switched on if the rollo screen 5 is fully closed or fully opened. In the embodiment where the light source is movable, the switch could be on the light source 27 itself. If necessary, measures should be taken to distribute the light along the length of the locking rod 26, especially if the light source 27 is arranged alongside the locking rod.

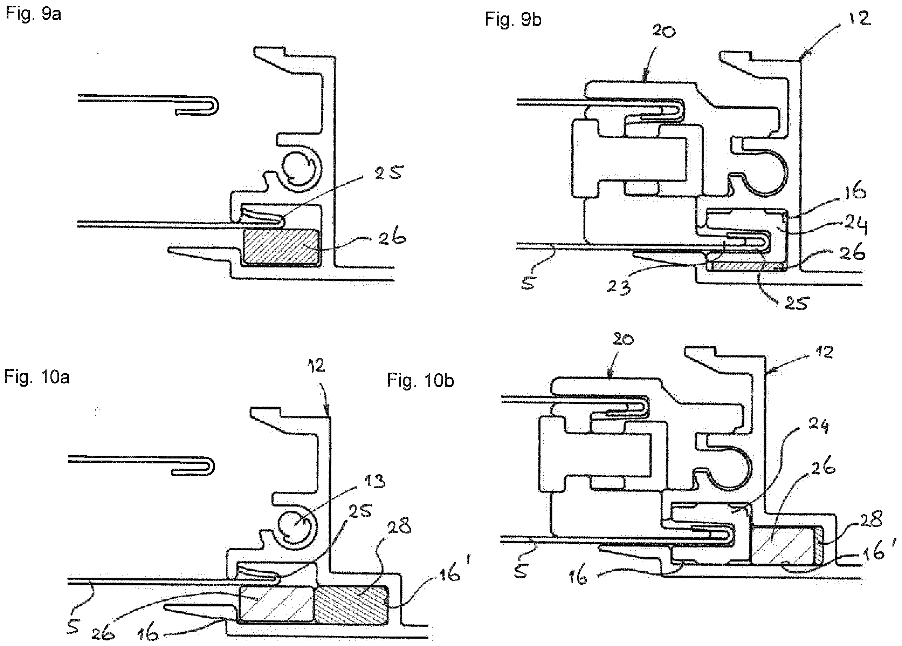

In the alternative embodiment of Fig. 9a, 9b, the locking rod 26 is stationary in longitudinal direction. In order to allow the compressing element 24 to pass the locking rod 26, it is made of a compressible material, such as static foam. In Fig. 9a the locking rod 26 is in its locking position keeping the hooking member 25 in a high position within the holding groove 16. In Fig. 9b, the locking rod 26 is locally compressed downwardly by the compressing element 24, so that it may move with respect to the locking rod 26 without requiring additional cross sectional space in the holding groove 16.

In the embodiment of Fig. 10a, 10b the locking rod 26 itself is not compressible, but an additional element 28, for example made of static foam or another spring member, is in this case provided in a lateral extension 16' of the holding groove 16 and is compressible to allow the locking rod 26 to enter the lateral extension 16' when the compressing element 24 has to pass the locking rod 26.

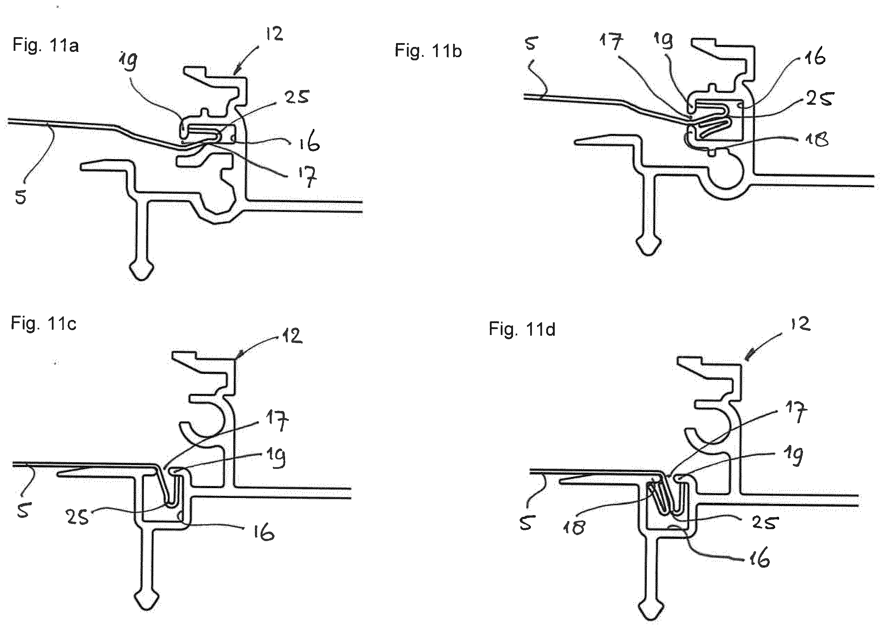

Figs. 11a - 11d show different configurations of the hooking member 25 and holding groove 16. Fig. 11a shows an arrangement similar to that in the embodiment of Figs 4 -7 (although the height of the holding groove is so small that no locking rod is provided. Fig. 11b shows a variation in which the hooking member 25 is arrow-shaped, i.e. it has two hooks or rigid strips, one on each side of the rollo screen 5. Each strip engages the respective rib 18 or 19 bordering the narrow entrance opening 17 of the holding groove 16. In the variation of Fig. 11c the narrow entrance opening 17 of the holding groove 16 is on the upper side thereof, so that the hooking member 25, here with a single strip, must now be inserted into and removed from the holding groove 25 in a vertical direction. In Fig. 11d, the holding groove 16 having the narrow entrance opening 17 on the upper side is combined with the arrow shaped hooking member 25.

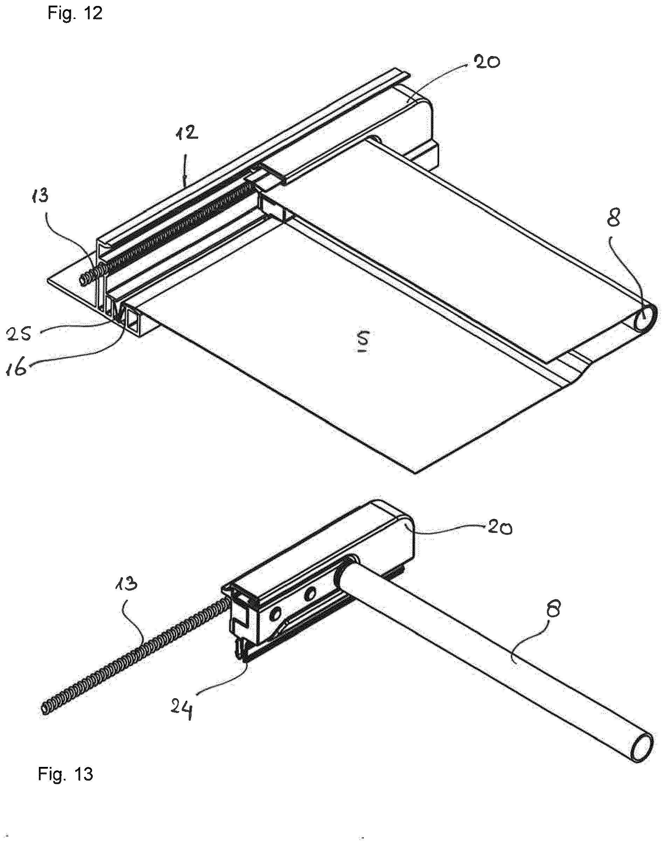

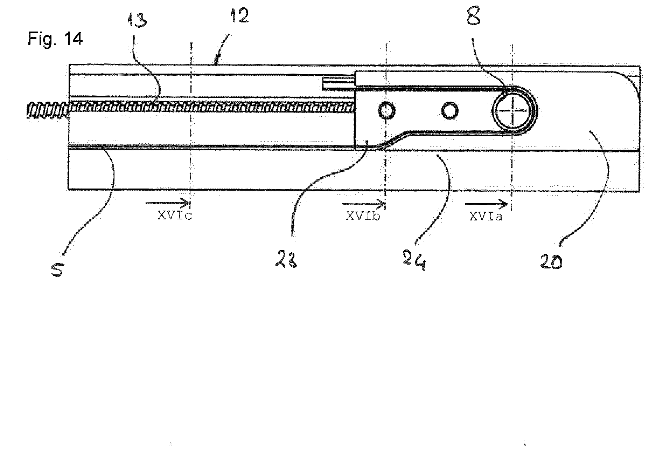

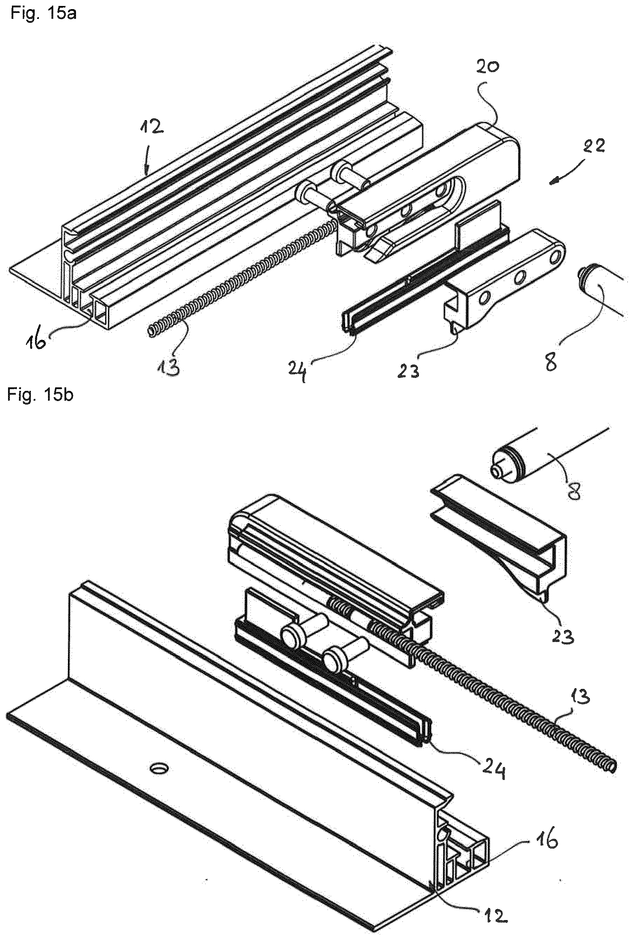

Figs. 12 - 16 show an embodiment of the rollo assembly having the hooking member and holding groove arrangement of Fig. 11d.

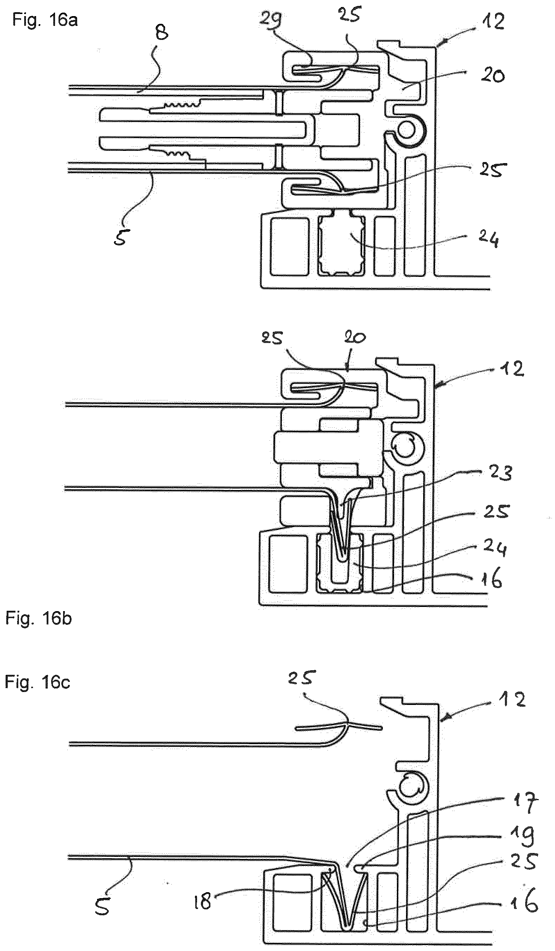

Figs. 12 -16 show that slider 20 comprises a guide 29 for the hooking member 25 where it is flattened in vertical direction and points in upward direction. When it is reversed at the reversal member 8 it will point downward (Fig. 16a) and is then ready to be introduced into the holding groove 16 when it is flattened in horizontal direction in order to pass the narrow entrance opening 17 (Fig. 16b). A knife-shaped element 23 is again provided to push the hooking member 25 into the holding groove 16 past the narrow entrance opening 17 (Fig. 16c). A compressing element 24 is also present (see Fig. 16b), operating in the same manner is in the former embodiment.

The rollo screen 5 adjacent the hooking member 25 is angled approximately 90 degrees into the holding groove 16. The arrow shaped hooking member 25 will hook behind both ribs 18, 19 defining the narrow opening 17. In combination with the angled pulling force from the rollo screen 5, a very reliable hooking within the holding groove 16 is accomplished.

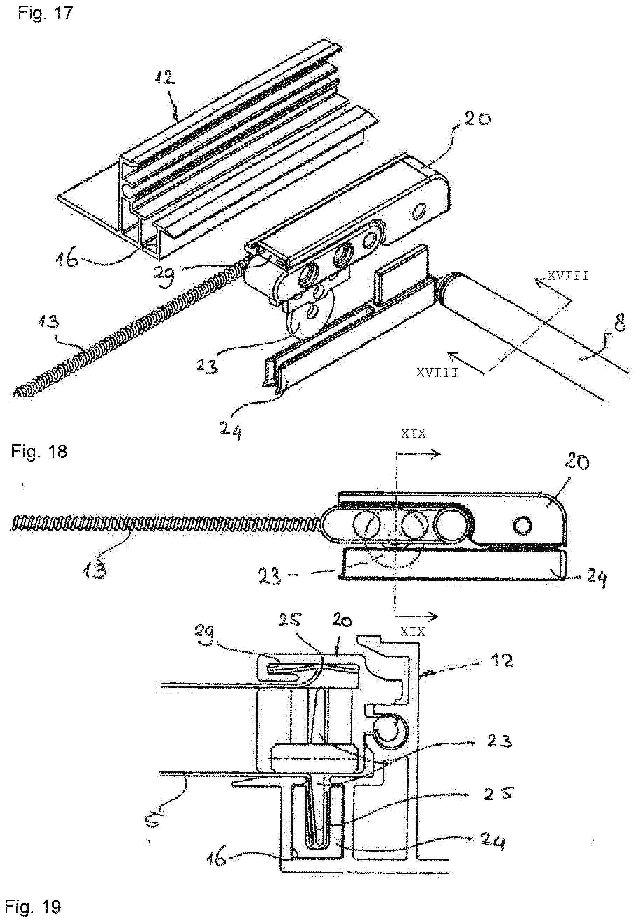

Figs. 17 - 19 show the variation of the rollo assembly 4 with a rotating knife-shaped element 23 to push the hooking member 25 into the holding groove 16. The outlet of the guide groove 29 in the slider 20 is adjacent to the entrance 17 of the holding groove 16. The compressing element 24 guides the hooking member 25 towards the rotating knife-shape element 23.

Further variations are shown in the following figures.

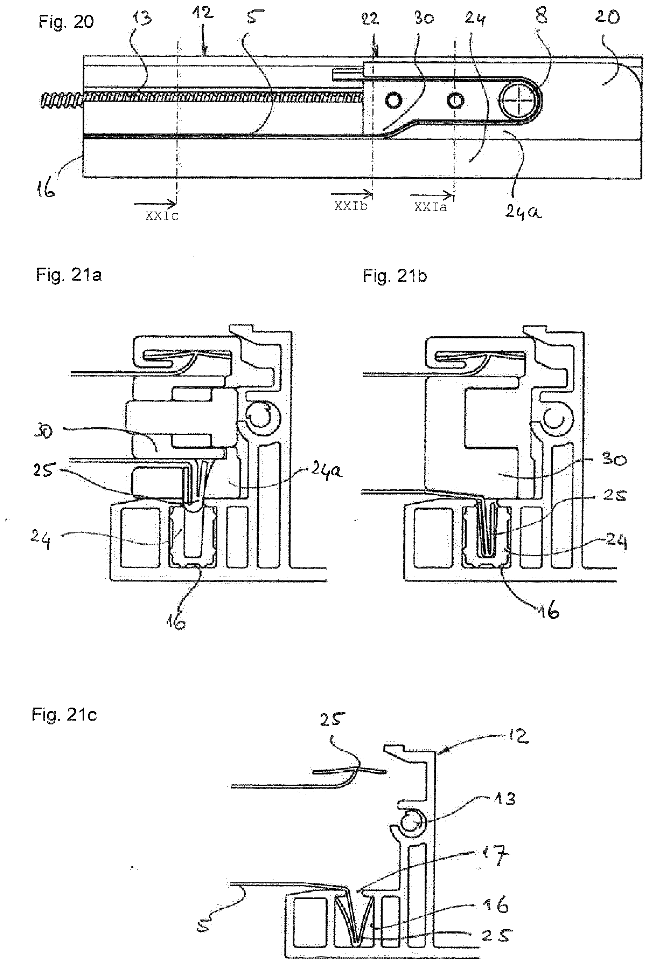

Figs. 20, 21 show an embodiment in which a pushing member 30 of the rollo screen displacement means 22 remains outside the holding groove 16. The compressing element 24 has a portion 24a outside the holding groove 16. The hooking member 25 is guided by it and the pushing member 30 pushes the hooking member 25 from the outside portion 24a to the inside portion 24b of the compressing element 24. Once there the compressing element 24 ends and the arrow-shaped hooking member 25 unfolds and is then locked within the holding groove 16. The edge 11 of the rollo screen 5 adjacent the hooking member 25 and the hooking member 25 itself are made from hard plastic so that it is possible to exert a pushing force onto it.

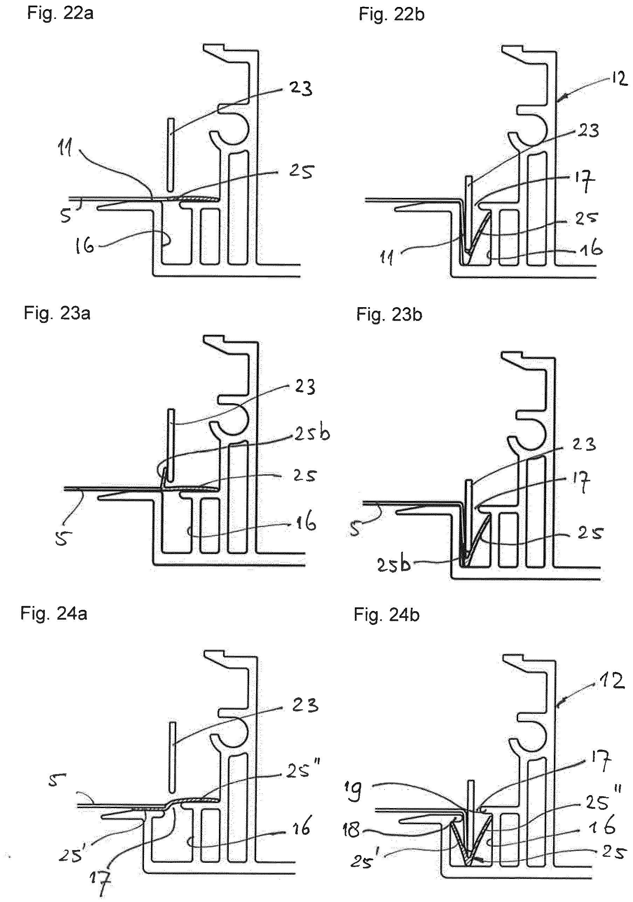

Figs. 22 -24 show some further examples of manners to introduce the hooking member 25 into the holding groove by means of the knife-shaped element 23. In Fig. 22a it is shown that the hooking member 25 and adjacent rollo screen edge 11 are substantially aligned when outside the holding groove 16. The knife-shaped element 23 pushes downwardly at the position where the strip of the hooking member 25 starts, i.e. where the strip will be angled down to form the hooking member 25 according to Fig. 22b.

In the variation of Fig. 23a, 23b, the strip of the hooking member 25 is provided with a relatively rigid flap 25b pointing upwards in the position of Fig. 23a, and forming a reference point for the knife-shaped element 23. The knife-shaped element 23 will push in the inward angle between the strip and the flap of the hooking member 25 which will reduce wear to the rollo screen, also if the knife-shaped element 23 and the hooking member 25 slide with respect to each other, as the knife-shaped element is in contact with relative rigid and sturdy plastic material only.

Fig. 24a shows a further variation in which the hooking member 25 is arrow-shaped, such that there is an inward short arrow arm 25' and an outward longer arrow arm 25''. The height of the holding groove at the position of the ribs 18 and 19 is adapted to the length of the arrow arms 25' and 25''. The difference in length is chosen as a result of the fact that the outward arrow arm 25'' will easier and earlier be introduced into the holding groove 16 than the inward arm 25'.

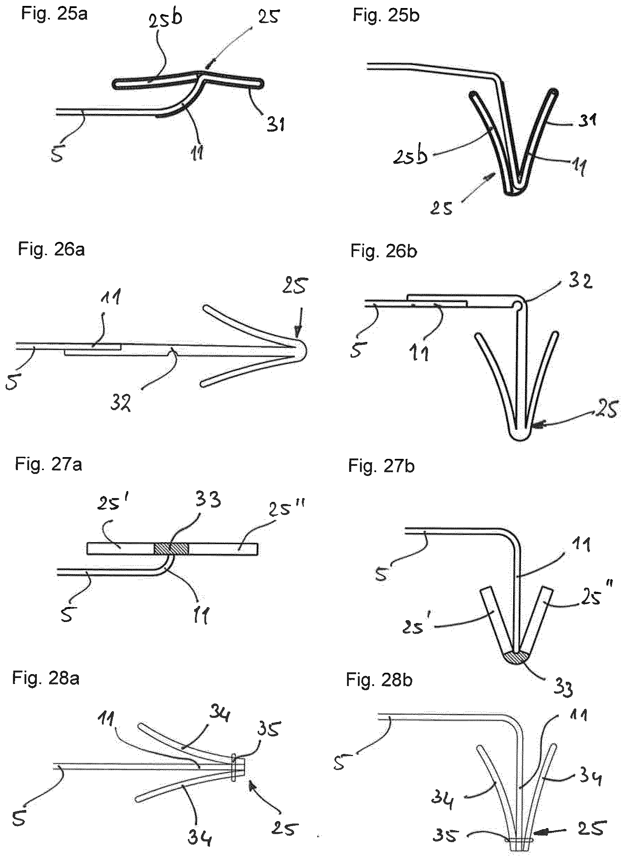

Figs. 25a,b show two positions of an embodiment of the arrow-shaped hooking member 25 before and after it is introduced into the holding groove 16. In this embodiment the hooking member 25 is formed by the edge 11 of the rollo screen 5 and an additional plastic strip 25b, both covered by a plastic layer 31 to attach the plastic strip and to make the edge of the rollo screen more rigid. In Fig. 25a, the arrow is folded flat and points upwards, while in Fig. 25b, it points downwards.

The embodiment of Fig. 26 comprises a one piece arrow-shaped hooking member 25 which is attached to a shortened edge 11 of the rollo screen. The body of the arrow includes a living hinge 32 to allow the rigid body to be bent into a 90 degree angle (Fig. 26b).

Fig. 27 shows an embodiment in which the arrow includes a flexible center piece 33 attached at right angles to the edge 11 of the rollo screen. The rigid arms 25', 25'' of the arrow are attached to opposite ends of the center piece, and can be folded by means of the flexible center piece between the straight (Fig. 27a) and pointed position (Fig. 27b). The arrow-shaped hooking member 25 may for example be formed by 2K extrusion to obtain portions (33, 25', 25'') of the hooking member 25 having different characteristics.

Fig. 28 shows a last embodiment in which the arms of the arrow are each formed by a loose pre-curved strip 34 attached, here by means of a stitch 35, to the edge 11 of the rollo screen 5. The resilient strips 34 can be deformed so as to be more straight and able to enter the holding groove 16 through the narrow entrance 17 and then return to the original shape to act as a hooking member 25.

The invention is not limited to the embodiments described before, which may be varied widely within the scope of the invention as defined by the appending claims. For example, it is conceivable to make the holding groove locally deformable to open the narrow entrance to enable the hooking member to enter the holding groove and then hook within the holding groove when the narrow entrance returns to the original, narrow shape. Further, it would be possible to provide a rollo assembly without a reversal member. The winding shaft is then arranged at the position of the reversal member, so that the winding shaft moves when the rollo screen is wound or unwound.
The translucent rod-shaped member with the light source could have a wider range of use. Such movable or stationary rod-shaped member could be combined with any kind of rollo system or even any kind of open roof construction, as long as there is a guide having a groove in which the translucent rod shaped member can be accommodated and which has one or more openings, preferably elongated as the narrow opening in the holding groove, through which the light from the rod-shaped member could be transmitted to the interior of the vehicle, particularly towards the lower side of the rollo screen. The rod-shaped member could move with a drive member, such as the drive cable or a part of a mechanism coupled to it. It could also be stationary. It could be provided in its own groove or in a common groove, for example together with the hooking member or drive cable. As mentioned before, the light source could be arranged at the end of the rod-shaped member or along the length thereof. The rod-shaped member could be made of PMMA and could be bendable, which is especially convenient if it is movable so that it can have its own run-out tube which is curved and bent inwardly.

## Claims

1. Open roof construction for a vehicle, comprising a roof opening (1) in a stationary roof part (2) and a rollo assembly (4) positioned below said roof opening intended for covering the roof opening (1), wherein the rollo assembly (4) comprises a rollo screen (5) and a winding shaft (6), said rollo screen including a rollo screen edge (9) which is attached to a stationary member (10) of the open roof construction, wherein the opposite edge being formed by an operating beam (8, 15) which is movable parallel to the roof opening in first and second directions (D1,D2) in correspondence with the amount of rollo screen (5) being wound on or off said winding shaft (6), the rollo screen having two longitudinal edges (11) which, when the rollo screen is wound off, are brought into engagement with holding members extending alongside the longitudinal edges of the roof opening, **characterized in that** the holding members each comprise a least a holding groove (16) having a narrow entrance (17), the longitudinal edges (11) of the rollo screen (5) each comprising a hooking member (25) which is insertable into the holding groove (16) and hooks behind the narrow entrance (17) thereof, the operating beam (8, 15) being provided with displacing means (22) acting on at least one of the hooking member (25) and holding groove (16) to enable the hooking member to enter and exit the holding groove (16).

2. Open roof construction according to claim 1, wherein the winding shaft (6) for the rollo screen is rotatable around a stationary axis of rotation (7), and wherein the rollo screen (5), starting from the winding shaft (6), firstly extends in a first direction (D1), next around a reversal member (8) at the position of the operating beam (8, 15) and finally back in an opposite second direction (D2) and ends at the rollo screen edge (9) which is attached to a stationary member (10) of the open roof construction.

3. Open roof construction according to claim 1 or 2, wherein each hooking member (25) is resiliently compressible so as to be insertable into the holding groove (16) through the narrow entrance (17) thereof and expandable once within the holding groove (16), the operating beam (8, 15) being provided with a compressing element (24) compressing the hooking member (25) when the rollo screen (5) is wound on to enable the hooking member (25) to leave the holding groove (16).

4. Open roof construction according to any of claims 1 - 3, wherein the displacing means (22) is provided with a pushing member (23; 30) to push the hooking member (25) into the holding groove (16) when the operating beam (8, 15) is moved to unwind the rollo screen (5).

5. Open roof construction according to claim 4, wherein the pushing member (23; 30) comprises a knife-shaped element (23) which extends into the holding groove (16).

6. Open roof construction according to any of the preceding claims, wherein the knife-shaped element (23) is circular and rotatable.

7. Open roof construction according to claim 1, wherein the hooking member (25) includes a sharp inward corner (25a) facing the narrow entrance opening (17), the knife-shaped element (23) engaging the corner when it pushes the hooking member into the holding groove (16).

8. Open roof construction according to any of the preceding claims, wherein the narrow opening (17) of the holding groove (16) is on the upper side thereof.

9. Open roof construction according to any of claims 1 - 8, wherein the narrow opening (17) of the holding groove (16) is on the lateral side thereof facing the opposite holding groove.

10. Open roof construction according to any of the preceding claims, wherein the hooking member (25) is arrow shaped.

11. Open roof construction according to any of claims 1 - 9, wherein the hooking member (25) is formed from a rigid strip folded away from the edge (11) of the rollo screen (5).

12. Open roof construction according to claim 11, wherein the operating beam (8, 15) is provided with a locking member (26) arranged within the holding groove on the side of the rollo screen (5) facing away from the rigid strip of the hooking member (25) in order to push the rollo screen and the rigid strip toward a side of the holding groove (16) such that the rigid strip is hooking behind a rib (19) defining one side of the narrow entrance (17) of the holding groove (16).

13. Open roof construction according to claim 12, wherein the locking member (26) is a translucent rod-shaped member which is visible through the narrow entrance (17) of the holding groove (16) and which is lighted by a light source (27), which is either stationary lighting the rod-shaped member from the side, or is movable with the rod-shaped member and lighting it from the end.

14. Open roof construction according to claim 2, wherein the reversal member (8) is a roller rotatably mounted at each end onto the operating beam (8, 15) which includes the displacing means (22).

## Patentansprüche

1. Offendachkonstruktion für ein Fahrzeug, aufweisend eine Dachöffnung (1) in einem stationären Dachteil (2) und eine Rollobaugruppe (4), die unter der Dachöffnung positioniert ist, die zum Bedecken der Dachöffnung (1) vorgesehen ist, wobei die Rollobaugruppe (4) eine Rolloblende (5) und eine Wickelwelle (6) aufweist, wobei die Rolloblende einen Rolloblendenrand (9) aufweist, der an einem stationären Element (10) der Offendachkonstruktion angebracht ist, wobei der entgegengesetzte Rand durch einen Betätigungsstab (8, 15) ausgebildet ist, der parallel zu der Dachöffnung in einer ersten und einer zweiten Richtung (D1, D2) entsprechend der Menge bewegbar ist, in der die Rolloblende (5) auf die Wickelwelle (6) auf- oder von dieser abgewickelt ist, wobei die Rolloblende zwei Längsränder (11) aufweist, die, wenn die Rolloblende abgewickelt wird, mit Halteelementen in Eingriff gebracht werden, die sich neben den Längsrändern der Dachöffnung erstrecken, **dadurch gekennzeichnet, dass** die Halteelemente jeweils mindestens eine Haltenut (16) aufweisen, die einen schmalen Eingang (17) aufweist, wobei die Längsränder (11) der Rolloblende (5) jeweils ein Einhakelement (25) aufweisen, das in die Haltenut (16) einsetzbar ist und sich hinter dem schmalen Eingang (17) davon einhakt, wobei der Betätigungsstab (8, 15) mit Verschiebemitteln (22) versehen ist, die auf mindestens eines von dem Einhakelement (25) und der Haltenut (16) einwirken, um zu ermöglichen, dass das Einhakelement in die Haltenut (16) ein- und aus dieser austritt.

2. Offendachkonstruktion gemäß Anspruch 1, wobei die Wickelwelle (6) für die Rolloblende um eine stationäre Rotationsachse (7) drehbar ist, und wobei sich die Rolloblende (5), ausgehend von der Wickelwelle (6), zunächst in einer ersten Richtung (D1), dann um ein Umkehrelement (8) an der Position des Betätigungsstabs (8, 15) und schließlich zurück in einer entgegengesetzten zweiten Richtung (D2) erstreckt und an dem Rolloblendenrand (9) endet, der an einem stationären Element (10) der Offendachkonstruktion angebracht ist.

3. Offendachkonstruktion gemäß Anspruch 1 oder 2, wobei jedes Einhakelement (25) federnd zusammendrückbar ist, um durch den schmalen Eingang (17) davon in die Haltenut (16) einsetzbar und einmal innerhalb der Haltenut (16) expandierbar zu sein, wobei der Betätigungsstab (8, 15) mit einem Kompressionselement (24) versehen ist, welches das Einhakelement (25) zusammendrückt, wenn die Rolloblende (5) aufgewickelt ist, um zu ermöglichen, dass das Einhakelement (25) aus der Haltenut (16) gelangt.

4. Offendachkonstruktion gemäß irgendeinem der Ansprüche 1 bis 3, wobei das Verschiebemittel (22) mit einem Schiebeelement (23; 30) versehen ist, um das Einhakelement (25) in die Haltenut (16) zu schieben, wenn der Betätigungsstab (8, 15) bewegt wird, um die Rolloblende (5) abzuwickeln.

5. Offendachkonstruktion gemäß Anspruch 4, wobei das Schiebeelement (23; 30) ein messerförmiges Element (23) aufweist, das sich in die Haltenut (16) erstreckt.

6. Offendachkonstruktion gemäß irgendeinem der vorhergehenden Ansprüche, wobei das messerförmige Element (23) kreisförmig und drehbar ist.

7. Offendachkonstruktion gemäß Anspruch 1, wobei das Einhakelement (25) eine scharfe Innenecke (25a) aufweist, die der schmalen Eingangsöffnung (17) zugewandt ist, wobei das messerförmige Element (23) in die Ecke eingreift, wenn es das Einhakelement in die Haltenut (16) schiebt.

8. Offendachkonstruktion gemäß irgendeinem der vorhergehenden Ansprüche, wobei die schmale Öffnung (17) der Haltenut (16) auf der oberen Seite davon ist.

9. Offendachkonstruktion gemäß irgendeinem der Ansprüche 1 bis 8, wobei die schmale Öffnung (17) der Haltenut (16) auf der seitlichen Seite davon ist, die der gegenüberliegenden Haltenut zugewandt ist.

10. Offendachkonstruktion gemäß irgendeinem der vorhergehenden Ansprüche, wobei das Einhakelement (25) pfeilförmig ist.

11. Offendachkonstruktion gemäß irgendeinem der Ansprüche 1 bis 9, wobei das Einhakelement (25) aus einem starren Streifen gebildet ist, der von dem Rand (11) der Rolloblende (5) weggefaltet ist.

12. Offendachkonstruktion gemäß Anspruch 11, wobei der Betätigungsstab (8, 15) mit einem Verriegelungselement (26) versehen ist, das innerhalb der Haltenut auf der Seite der Rolloblende (5) angeordnet ist, die von dem starren Streifen des Einhakelements (25) abgewandt ist, um die Rolloblende und den starren Streifen in Richtung zu einer Seite der Haltenut (16) zu schieben, so dass sich der starre Streifen hinter einer Rippe (19) einhakt, die eine Seite des schmalen Eingangs (17) der Haltenut (16) definiert.

13. Offendachkonstruktion gemäß Anspruch 12, wobei das Verriegelungselement (26) ein lichtdurchlässiges stabförmiges Element ist, das durch den schmalen Eingang (17) der Haltenut (16) sichtbar ist und das von einer Lichtquelle (27) beleuchtet wird, die entweder stationär ist und das stabförmige Element von der Seite her beleuchtet, oder mit dem stabförmigen Element bewegbar ist und es vom Ende her beleuchtet.

14. Offendachkonstruktion gemäß Anspruch 2, wobei das Umkehrelement (8) eine Rolle ist, die an jedem Ende drehbar an dem Betätigungsstab (8, 15) montiert ist, der die Verschiebemittel (22) aufweist.

## Revendications

1. Construction de toit ouvrant pour un véhicule, comprenant une ouverture de toit (1) dans une partie de toit fixe (2) et un ensemble roulant (4) positionné en dessous de ladite ouverture de toit destiné à couvrir l'ouverture de toit (1), dans laquelle l'ensemble roulant (4) comprend un rideau roulant (5) et un arbre d'enroulement (6), ledit rideau roulant comportant un bord de rideau roulant (9) qui est attaché à un organe fixe (10) de la construction de toit ouvrant, dans laquelle le bord opposé est formé par une traverse de fonctionnement (8, 15) qui est mobile parallèle à l'ouverture de toit dans des première et seconde directions (D1, D2) en correspondance avec la quantité d'enroulement ou de déroulement du rideau roulant (5) sur ou depuis ledit arbre d'enroulement (6), le rideau roulant ayant deux bords longitudinaux (11) qui, lorsque le rideau roulant est déroulé, sont amenés en engagement avec des organes de maintien s'étendant le long des bords longitudinaux de l'ouverture de toit, **caractérisée en ce que** les organes de maintien comprennent chacun au moins une gorge de maintien (16) ayant une entrée étroite (17), les bords longitudinaux (11) du rideau roulant (5) comprenant chacun un organe d'accrochage (25) qui peut être inséré dans la gorge de maintien (16) et des crochets derrière l'entrée étroite (17) de celle-ci, la traverse de fonctionnement (8, 15) étant pourvue d'un moyen de déplacement (22) agissant sur au moins l'un de l'organe d'accrochage (25) et de la gorge de maintien (16) pour permettre à l'organe d'accrochage d'entrer et de sortir dans et de la gorge de maintien (16).

2. Construction de toit ouvrant selon la revendication 1, dans laquelle l'arbre d'enroulement (6) pour le rideau roulant peut tourner autour d'un axe fixe de rotation (7), et dans laquelle le rideau roulant (5), en partant de l'arbre d'enroulement (6), s'étend d'abord dans une première direction (D1), puis autour d'un organe d'inversion (8) à la position de la traverse de fonctionnement (8, 15) et enfin de retour dans une seconde direction opposée (D2) et termine au niveau du bord de rideau roulant (9) qui est attaché à un organe fixe (10) de la construction de toit ouvrant.

3. Construction de toit ouvrant selon la revendication 1 ou 2, dans laquelle chaque organe d'accrochage (25) est compressible de façon résiliente de façon à pouvoir être inséré dans la gorge de maintien (16) à travers son entrée étroite (17) et peut s'agrandir une fois qu'il est au sein de la gorge de maintien (16), la traverse de fonctionnement (8, 15) étant pourvue d'un élément de compression (24) comprimant l'organe d'accrochage (25) lorsque le rideau roulant (5) est enroulé pour permettre à l'organe d'accrochage (25) de quitter la gorge de maintien (16).

4. Construction de toit ouvrant selon l'une quelconque des revendications 1 à 3, dans laquelle le moyen de déplacement (22) est pourvu d'un organe de poussée (23 ; 30) pour pousser l'organe d'accrochage (25) dans la gorge de maintien (16) lorsque la traverse de fonctionnement (8, 15) est déplacée pour dévider le rideau roulant (5).

5. Construction de toit ouvrant selon la revendication 4, dans laquelle l'organe de poussée (23 ; 30) comprend un élément en forme de couteau (23) qui s'étend dans la gorge de maintien (16).

6. Construction de toit ouvrant selon l'une quelconque des revendications précédentes, dans laquelle l'élément en forme de couteau (23) est circulaire et peut tourner.

7. Construction de toit ouvrant selon la revendication 1, dans laquelle l'organe d'accrochage (25) comporte un coin vers l'intérieur pointu (25a) tourné vers l'ouverture d'entrée étroite (17), l'élément en forme de couteau (23) s'engageant avec le coin lorsqu'il pousse l'organe d'accrochage dans la gorge de maintien (16).

8. Construction de toit ouvrant selon l'une quelconque des revendications précédentes, dans laquelle l'ouverture étroite (17) de la gorge de maintien (16) est sur son côté supérieur.

9. Construction de toit ouvrant selon l'une quelconque des revendications 1 à 8, dans laquelle l'ouverture étroite (17) de la gorge de maintien (16) est sur son côté latéral tourné vers la gorge de maintien opposée.

10. Construction de toit ouvrant selon l'une quelconque des revendications précédentes, dans laquelle l'organe d'accrochage (25) est en forme de flèche.

11. Construction de toit ouvrant selon l'une quelconque des revendications 1 à 9, dans laquelle l'organe d'accrochage (25) est formé d'une bande rigide pliée en éloignement du bord (11) du rideau roulant (5).

12. Construction de toit ouvrant selon la revendication 11, dans laquelle la traverse de fonctionnement (8, 15) est pourvue d'un organe de verrouillage (26) agencé au sein de la gorge de maintien sur le côté du rideau roulant (5) tourné à l'opposé de la bande rigide de l'organe d'accrochage (25) afin de pousser le rideau roulant et la bande rigide vers un côté de la gorge de maintien (16) de sorte que la bande rigide s'accroche derrière une nervure (19) définissant un côté de l'entrée étroite (17) de la gorge de maintien (16).

13. Construction de toit ouvrant selon la revendication 12, dans laquelle l'organe de verrouillage (26) est un organe en forme de tige translucide qui est visible à travers l'entrée étroite (17) de la gorge de maintien (16) et qui est éclairé par une source de lumière (27), qui soit éclaire de façon fixe l'organe en forme de tige depuis le côté, soit est mobile avec l'organe en forme de tige et l'éclaire depuis l'extrémité.

14. Construction de toit ouvrant selon la revendication 2, dans laquelle l'organe d'inversion (8) est un rouleau monté en rotation au niveau de chaque extrémité sur la traverse de fonctionnement (8, 15) qui comporte le moyen de déplacement (22).
